# EUROPÄISCHE PATENTSCHRIFT

(11) **EP 0 984 044 B1**
(45) Veröffentlichungstag und Bekanntmachung des Hinweises auf die Patenterteilung: **10.04.2002**
(21) Anmeldenummer: 99117177.8
(22) Anmeldetag: 01.09.1999
(51) Int. Cl.: C09C 1/00

(54) **Bismutvanadatpigmente mit mindestens einer metallfluoridhaltigen Beschichtung**
Bismuth vanadate based pigments having at least one metalfluoride-containing coating
Pigment à base de vanadate de bismuth avec au moins un revêtement contenant un fluorure métallique

(30) Priorität: 03.09.1998 DE 19840156
(43) Veröffentlichungstag der Anmeldung: 08.03.2000
(73) Patentinhaber: BASF AKTIENGESELLSCHAFT, 67056 Ludwigshafen (DE)
(72) Erfinder: Seeger, Oliver, Dr., 68163 Mannheim (DE); Reisacher, Hansulrich, Dr., 67133 Maxdorf (DE); Mronga, Norbert, Dr., 69221 Dossenheim (DE); Zickgraf, Reinhard, 67165 Waldsee (DE)

(56) Entgegenhaltungen:
- EP-A- 0 430 888
- US-A- 4 851 049
- US-A- 5 607 504

## Beschreibung

Die vorliegende Erfindung betrifft Bismutvanadatpigmente, die mindestens eine metallfluoridhaltige Beschichtung, die Calciumfluorid, Bismutoxyfluorid oder ein Lanthanidenfluorid oder -oxyfluorid oder ein Gemisch dieser Fluoride enthält, aufweisen.

Weiterhin betrifft die Erfindung die Verwendung dieser Bismutvanadatpigmente zur Einfärbung von Lacken, Druckfarben und Kunststoffen.

Bismutvanadatpigmente sind seit langem bekannt. Neben dem reinen BiVO₄-Pigment werden auch eine Reihe von BiVO₄-Pigmenten beschrieben, in denen ein Teil der Metall- und/oder Sauerstoffatome durch andere Metalle und/oder Nichtmetalle ersetzt ist. Diese Pigmente stellen interessante nichttoxische Gelbpigmente dar und eignen sich vor allem für die Einfärbung von Lacken und Kunststoffen. Zur Verbesserung ihrer Anwendungseigenschaften, insbesondere ihrer thermischen Stabilität, ihrer Wetterechtheit und ihrer Beständigkeit gegen Chemikalien, werden die Bismutvanadatpigmente vielfach mit Schutzhüllen aus Metalloxiden (auch Silikaten) und/ oder Schutzhüllen aus Phosphaten versehen, die auch Fluorid enthalten können.

So ist aus der US-A-4 063 956 die Umhüllung von monoklinem Bismutvanadat mit einer ersten Metalloxidhydratschicht (z.B. Aluminiumoxidhydroxid) und einer zweiten dichten Schicht aus amorphem Siliciumdioxid bekannt. In der US 4 115 141 erfolgt die Stabilisierung von Bismutvanadat durch eine Siliciumdioxid- oder eine Aluminiumphosphatbelegung.

Kombinierte Oxidbeschichtungen sind auch in der US-A-4 455 174 beschrieben, in der Bismutvanadatpigmente der Zusammensetzung BiVO₄·x Bi₂MoO₆·y Bi₂WO₆ (x = 0,6- 2,25, y = 0 - 0,1) zunächst mit Zirkondioxid und dann mit Siliciumdioxid belegt werden. In der US-A-4 752 460 werden dotierte tetragonale Bismutvanadatpigmente des Typs (Bi,A)(V,D)O₄ (A = Mg, Ca, Sr, Ba, Zn; D = Mo und/oder W; molares Verhältnis A:Bi = 0,1 - 0,4 und D:V = 0 - 0,4) zuerst mit Siliciumdioxid und anschließend mit Aluminiumoxid beschichtet.

In der US-A-5 123 965 wird die Beschichtung der dotierten tetragonalen Bismutvanadatpigmente mit Aluminiumphosphat, Calciumphosphat, Titanphosphat sowie Mischungen von Zinkphosphat und Aluminium-, Magnesium-, Zirkonium-, Titan- oder Calciumphosphat beschrieben. Die Beschichtung mit Aluminiumphosphat wird dabei auch in Gegenwart von Fluoridionen vorgenommen.

Fluoridhaltige Metalloxidbeschichtungen auf Basis Siliciumdioxid, Magnesiumsilikat und Magnesiumfluorid sind schließlich aus der EP-A-271 813 bekannt, in der Bismutvanadatpigmente der Formel BiVO₄·x Bi₂MoO₆ (x = 0,2 - 0,25) mit dieser gemischten Schicht und zusätzlich mit einer Wachsschicht belegt werden.

Die bekannten Beschichtungen führen jedoch nicht immer zu Bismutvanadatpigmenten mit zufriedenstellenden Eigenschaften.

Der Erfindung lag daher die Aufgabe zugrunde, Bismutvanadatpigmente mit guten Anwendungseigenschaften, insbesondere mit guten Stabilitäten, z.B. guter Wetterechtheit, bereitzustellen.

Demgemäß wurden Bismutvanadatpigmente gefunden, welche mindestens eine metallfluoridhaltige Beschichtung, die Calciumfluorid, Bismutoxyfluorid oder ein Lanthanidenfluorid oder -oxyfluorid oder ein Gemisch dieser Fluoride enthält, aufweisen.

Außerdem wurde die Verwendung dieser Bismutvanadatpigmente zur Einfärbung von Lacken, Druckfarben und Kunststoffen gefunden.

Als Basis für die erfindungsgemäßen Bismutvanadatpigmente sind alle bekannten und teilweise bereits oben genannten Pigmente auf Bismutvanadatbasis geeignet. Weitere Beispiele für geeignete Basispigmente sind die in der EP-A-640 566 und der DE-A-195 29 837 beschriebenen dotierten Bismutvanadatpigmente.

Die erfindungsgemäßen Bismutvanadatpigmente sind mindestens mit einer metallfluoridhaltigen Schicht belegt, die im wesentlichen aus Calciumfluorid, Bismutoxyfluorid oder einem Lanthanidenfluorid oder -oxyfluorid, bevorzugt Lanthanfluorid, Lanthanoxyfluorid, Cerfluorid, Ceroxyfluorid, Yttriumfluorid oder Yttriumoxyfluorid, besteht. Selbstverständlich können die genannten Fluoride (und/oder Oxyfluoride) nebeneinander in einer Schicht vorliegen, bevorzugt ist jedoch die getrennte Aufbringung jeweils nur ein Fluorid enthaltender Schichten.

Besonders bevorzugt sind Calciumfluoridschichten und Bismutoxyfluoridschichten, wobei Calciumfluoridschichten vorzugsweise mit weiteren stabilisierenden Beschichtungen kombiniert werden.

So kann die erfindungsgemäße metallfluoridhaltige Beschichtung vorteilhaft mit metalloxidhaltigen Beschichtungen und/oder metallphosphathaltigen Beschichtungen kombiniert sein, wobei Kombinationen von Metallfluoridschichten und Metalloxidschichten bevorzugt sind. In der Regel werden die Schichten nacheinander aufgebracht, eine gewisse Durchmischung der Schichten ist insbesondere beim gleichen Schichttyp (Fluorid, Oxid bzw. Phosphat) jedoch nicht auszuschließen. Vorzugsweise wird die metallfluoridhaltige Beschichtung (oder werden die metallfluoridhaltigen Beschichtungen) bei der Mehrfachbeschichtung als innerste Schicht auf das Bismutvandatpigment aufgebracht. Die Beschichtungsreihenfolge kann aber auch geändert werden.

Bevorzugte Materialien für die metalloxidhaltigen Beschichtungen sind Oxide und Oxidhydrate von Erdalkalimetallen, insbesondere Magnesium, Calcium, Strontium und Barium, von Aluminium, Silicium, Zinn, Titan, Zirkonium, Hafnium, Niob, Tantal, Zink und von Lanthanidenmetallen, insbesondere Lanthan, Cer und Yttrium. Besonders geeignet sind auch Mischoxide dieser Metalle, insbesondere die Metallsilikate. Selbstverständlich können diese Verbindungen ebenfalls auch nebeneinander in einer Schicht vorliegen.

Beispiele für besonders bevorzugte Oxide sind Aluminiumoxid, Aluminiumoxidhydrat, Cerdioxid und Siliciumdioxid sowie die Calciumsilikate CaSiO₃ und Ca₂SiO₅, wobei CaSiO₃ und Siliciumdioxid ganz besonders bevorzugt sind. Liegt eine metalloxidhaltige Schicht als äußere Schicht vor, so ist eine Siliciumdioxidschicht besonders günstig.

Bevorzugte Materialien für die metallphosphathaltigen Beschichtungen sind die Phosphate, vor allem die Orthophosphate, von Erdalkalimetallen, insbesondere Magnesium und Calcium, von Zink und von Aluminium, die selbstverständlich auch gemischt in einer Schicht vorliegen können, was für die Erdalkalimetalle und Zink bevorzugt ist.

Die erfindungsgemäßen Bismutvanadatpigmente können beliebig viele Beschichtungen aufweisen. Bevorzugt sind ein bis vier Beschichtungen. Als besonders bevorzugte Beschichtungen seien z.B. die Einfachbeschichtung mit Bismutoxyfluorid sowie die Kombinationsbeschichtung mit Calciumfluorid, Calciummetasilikat und Siliciumdioxid oder mit Bismutoxyfluorid, Calciumfluorid, Calciummetasilikat und Siliciumdioxid genannt. Weitere geeignete 5 Kombinationen können den Beispielen entnommen werden.

Je nach der Teilchengröße und der spezifischen Oberfläche des eingesetzten Bismutvanadats enthalten die erfindungsgemäßen stabilisierten Bismutvanadatpigmente in der Regel 2 bis 40 Gew.-%, bevorzugt 4 bis 20 Gew.-%, Beschichtungsmaterial, bezogen auf das Gewicht des beschichteten Pigments. Der Fluoridgehalt beträgt im allgemeinen 0,05 bis 10 Gew.-%, vorzugsweise 1 bis 5 Gew.-%, bezogen auf das Gewicht des beschichteten Pigments.

Die erfindungsgemäßen Bismutvandadatpigmente zeichnen sich durch ihre hohe Stabilität, insbesondere ihre sehr gute Wetterechtheit und niedrige Photochromie, aus. Unter Photochromie wird die durch sichtbares oder ultraviolettes Licht hervorgerufene, reversible Umwandlung eines Stoffes in einen anderen, der sich von dem Ausgangsstoff durch seine Farbe (Absorptionsspektrum) unterscheidet, verstanden. Als Angabe für die Photochromie dient der dE-Wert, welcher der gesamten koloristischen Abweichung (CIELAB) entspricht. Die erfindungsgemäßen Bismutvanadatpigmente weisen zudem eine ausgezeichnete Säurestabilität auf, wenn sie mit einer Bismutoxyfluoridschicht beschichtet sind.

Die erfindungsgemäßen Bismutvanadatpigmente vermögen jedoch nicht nur hinsichtlich ihrer Stabilität zu überzeugen, sondern weisen zudem, was nicht vorauszusehen war, hervorragende koloristische Eigenschaften, vor allem hohe Farbtonreinheit (Chroma) und Helligkeit, auf.

Bei der Herstellung der erfindungsgemäßen Bismutvanadatpigmente werden die Beschichtungen vorteilhaft naßchemisch auf das ausgewählte Basispigment aufgefällt.

Zur Abscheidung der metallfluoridhaltigen Schicht werden eine Suspension des Substrats (das kann ein unbeschichtetes Bismutvanadatpigment oder ein bereits mit Metalloxid oder Metallphosphat belegtes Bismutvanadatpigment sein), eine Lösung eines Calcium-, Bismut- oder Lanthanidenmetallsalzes und eine Fluoridionen enthaltende Lösung intensiv miteinander gemischt, wobei vorzugsweise wäßrige Lösungen und Suspensionen verwendet werden.

Verfahrenstechnisch kann man auf verschiedene Weise vorgehen: Man kann die Substratsuspension vorlegen und gleichzeitig die Lösung des Calcium-, Bismut- oder Lanthanidenmetallsalzes und die Fluoridionen enthaltende Lösung zugeben. Man kann aber auch die Fluoridionen enthaltende Lösung mit der Substratsuspension vorlegen und die Calcium-, Bismut- oder Lanthanidenmetallsalzlösung zugeben oder umgekehrt die Calcium-, Bismut- oder Lanthanidenmetallsalzlösung mit der Substratsuspension vorlegen und die Fluoridionen enthaltende Lösung zugeben.

Der pH-Wert des Gemisches wird während der Zugabe der Calcium-, Bismut- oder Lanthanidenmetallsalzlösung und/oder der Fluoridionen enthaltenden Lösung zweckmäßigerweise bei 2 bis 11, vorzugsweise bei 5 bis 9, gehalten.

Die Temperatur kann während der Fällung im Bereich von Raumtemperatur bis zum Siedepunkt des Gemisches (Rückflußtemperatur) liegen. Bevorzugt ist eine Temperatur von 20 bis 80°C.

Wenn die Belegung mit metalloxidhaltigen Schichten gewünscht ist, kann auf an sich bekannte Weise vorgegangen werden, indem die Substratsuspension (unbeschichtetes oder bereits beschichtetes Bismutvanadatpigment) mit einer vorzugsweise wäßrigen Lösung eines Salzes des jeweiligen Metalls gemischt wird und das Oxid bzw. Oxidhydrat unter Einhaltung eines pH-Wertes von üblicherweise 3 bis 10, vorzugsweise 5 bis 9, auf das Substrat aufgefällt wird.

Metallphosphathaltige Schichten können analog auf ebenfalls bekannte Weise durch Mischen der Substratsuspension mit der (oder den) entsprechenden Metallsalzlösung(en) und einer Phosphationen enthaltenden Lösung unter Einhaltung eines pH-Wertes von im allgemeinen 3 bis 10, bevorzugt 5 bis 9, abgeschieden werden.

Zur Herstellung der für die Fällungsreaktionen benötigten Metallsalzlösungen können im Prinzip alle in Wasser (gegebenenfalls unter Zugabe einer Säure) löslichen Salze der Metalle mit anorganischen oder organischen Säuren verwendet werden. Beispiele für bevorzugte Metallsalze sind: Calciumnitrat, Calciumsulfat, Calciumchlorid, Magnesiumnitrat, Magnesiumsulfat, Magnesiumchlorid, Aluminiumsulfat, Aluminiumnitrat, Natriumaluminat, Aluminiumacetat, Alkalimetallsilikate wie Natronwasserglas und Kaliumwasserglas, Zinknitrat, Zinksulfat, Zinkchlorid, Bismutnitrat, Cernitrat, Cerammoniumnitrat, Cersulfat, Cerchlorid, Lanthannitrat, Lanthansulfat, Lanthanchlorid, Yttriumnitrat, Yttriumsulfat und Yttriumchlorid.

Die Fluoridionen enthaltenden Lösungen werden vorzugsweise ausgehend von Alkalimetallfluoriden, Ammoniumfluoriden oder komplexen fluoridhaltigen Salzen hergestellt. Beispiele für besonders geeignete Fluoride sind: Natriumfluorid, Kaliumfluorid, Kaliumhydrogendifluorid, Ammoniumfluorid, Ammoniumhydrogenfluorid, Natriumtetrafluoroborat und Ammoniumtetrafluoroborat.

Bevorzugte Phosphationen enthaltende Lösungen sind z.B. Lösungen von Alkalimetallphosphaten und -hydrogenphosphaten, insbesondere Natriumphosphat und Kaliumphosphat, und insbesondere Phosphorsäure.

Nach Abscheiden der letzten Schicht bzw. nach Ende der letzten Zugabe wird die Suspension in der Regel noch 1 bis 5 h gerührt. Das beschichtete Bismutvanadatpigment kann dann, gegebenenfalls nach Abkühlen auf Raumtemperatur, in üblicher Weise durch Abfiltrieren, Waschen und Trocknen isoliert werden.

Gewünschtenfalls kann man das beschichtete Bismutvanadatpigment einer Mahlung unterziehen. Bevorzugt ist dabei eine Naßmahlung, die vorzugsweise nach dem Waschen des Pigments eingeschoben wird.

Koloristisch besonders wertvolle Bismutvanadatpigmente mit hoher Farbtonreinheit und Helligkeit werden erhalten, wenn das Pigment einer thermischen Behandlung unterzogen wurde.

Der Zeitpunkt der thermischen Behandlung spielt in der Regel keine Rolle. Entweder kann man das unbeschichtete Basispigment in üblicher Weise nach der Synthese oder das beschichtete Pigment nach dem Trocknen tempern.

Dabei wird das getrocknete beschichtete Pigment im allgemeinen 0,5 bis 20 h auf eine Temperatur > 300°C, vorzugsweise auf 350 bis 700°C, erhitzt.

Zweckmäßigerweise wird das getemperte beschichtete Pigment anschließend einer Naßmahlung unterzogen. Eine Mahlung des Pigments nach der Beschichtung erübrigt sich selbstverständlich in diesem Fall.

Gewünschtenfalls kann man die erfindungsgemäßen Bismutvanadatpigmente zusätzlich noch mit organischen Additiven belegen, um beispielsweise die Dispergierbarkeit in Lacksystemen zu verbessern.

Die erfindungsgemäßen Bismutvanadatpigmente eignen sich vorteilhaft zum Einfärben von Lacken, Druckfarben und Kunststoffen.

### Beispiele

### Herstellung und Beurteilung von erfindungsgemäßen Bismutvanadatpigmenten

Zur Beurteilung der koloristischen Eigenschaften und der Photochromie wurden Lackierungen untersucht, die folgendermaßen hergestellt wurden: Eine Mischung aus 15 g des jeweiligen Pigments und 35 g Alkyd-Melamin-Einbrennlack wurde mit 70 g Glasperlen (1 mm Durchmesser) 60 min mit einem Skandexgerät geschüttelt, dann auf schwarz/weiß lackiertes Aluminumblech deckend appliziert und nach Ablüften 30 min bei 130°C eingebrannt.

Zur Beurteilung der Photochromie wurden die Lackierungen jeweils zur Hälfte mit einer Blechblende abgedeckt und dann 2 h mit einem Xenostrahler NXe 1500B (Fa. Original, Hanau) bestrahlt. Die dE-Werte wurden durch Vermessung des belichteten und des unbelichteten Teils der Lackierungen nach 30minütiger Lagerung der Probe im Dunkeln mit einem Zeiss-Spektralphotometer RFC 16 ermittelt.

Die Beurteilung der Wetterechtheiten erfolgte am Vollton mittels Schnellbewitterung während 80 Tagen im Xenotest 1200, Wendelauf (Fa. Heraeus) nach DIN 53387. Die Bewertung wurde nach DIN EN 20105-A02 (Graumaßstab zur Bewertung der Farbänderung) vorgenommen. Die Notenskala reicht bei dieser Bewertung von 0 (miserable Wetterechtheit) bis 5 (hervorragende Wetterechtheit).

Zur Bestimmung der CIELAB-Werte Farbwinkel (Hue H [°]), Chroma C* und Helligkeit L* wurden die erhaltenen Lackierungen mit dem o.g. Spektralphotometer vermessen. Die erhaltenen Werte sind in der unten folgenden Tabelle zusammengestellt.

### Beispiel 1

a) Zu einer Mischung aus 1000 g Wasser, 418 g wäßriger Natriumvanadatlösung (7 Gew.-% Vanadium) und 5,5 g 85 gew.-%iger Phosphorsäure wurden unter Rühren in 30 min 1130 g wäßrige Bismutnitratlösung (11,05 Gew.-% Bismut) zugegeben. Der pH-Wert der Mischung wurde dann mit 30 gew.-%iger Natronlauge in 1 h auf 4,5 und anschließend mit 5 gew.-%iger Natronlauge in 10 min auf 5 eingestellt.
   Die entstandene Suspension wurde dann unter Einhaltung des pH-Wertes 5 auf 95°C erhitzt. Nach ca. 40 min färbte sich die Suspension tiefgelb, und der pH-Wert stieg zügig auf 8,1 an. Die Suspension wurde bis zur pH-Konstanz bei 95°C gerührt.
   Nach Abkühlen auf Raumtemperatur wurde das Produkt abfiltriert, salzfrei gewaschen und bis zur Weiterverarbeitung als Preßkuchen (Feststoffgehalt: von 20 bis 30 Gew.-%; im vorliegenden Fall: 23,8 Gew.-%) aufbewahrt.
   Das erhaltene Bismutvanadatpigment hatte einen Bismutgehalt von 63,0 Gew.-% und einen Vanadiumgehalt von 14,9 Gew.-%.
b) Das in a) erhaltene Bismutvanadatpigment wurde nach dem Trocknen 1 h bei 450°C getempert. Danach wurde das Pigment einer Naßmahlung in Gegenwart von Wasser auf eine mittlere Teilchengröße von 0,8 µm unterzogen und im Umlufttrockenschrank bei 100°C getrocknet.
   Das erhaltene unbeschichtete Bismutvanadatpigment wurde im Schnellbewitterungstest mit der Note 3 bewertet, seine Photochromie dE betrug 2,5.

### Beispiel 2

Zu einer Suspension von 1100 g eines analog Beispiel 1a) hergestellten Bismutvanadatpreßkuchens (Feststoffgehalt 23,8 Gew.-%) in 875 ml Wasser wurden eine Lösung von 28,7 g Kaliumfluorid in 325 ml Wasser und eine Lösung von 116 g Calciumnitrattetrahydrat in 1 l Wasser parallel unter Rühren in 2,5 h bei Raumtemperatur zugetropft. Der pH-Wert der Suspension lag nach Zugabe der Lösungen bei 5,8.

Nach Erhitzen der Suspension auf 80°C wurden 1050 ml Natronwasserglaslösung (15 g Si/l) in 1,5 h zugegeben. Der pH-Wert stieg dabei auf 8,2 an.

Nach einstündigem Nachrühren bei 80°C und anschließendem Abkühlen auf Raumtemperatur wurde das beschichtete Pigment abfiltriert, mit Wasser gewaschen, im Umlufttrockenschrank bei 110°C getrocknet und 1 h bei 400°C getempert. Danach wurde das Pigment einer Naßmahlung auf eine mittlere Teilchengröße von 0,8 µm unterzogen und im Umlufttrockenschrank bei 100°C getrocknet.

Das erhaltene mit CaF₂/CaSiO₃/SiO₂ beschichtete Bismutvanadatpigment hatte einen Calciumgehalt von 4,7 Gew.-%, einen Siliciumgehalt von 4,3 Gew.-% und einen Fluoridgehalt von 2,7 Gew.-% und wurde im Schnellbewitterungstest mit der Note 5 bewertet, seine Photochromie dE betrug 0,6.

### Beispiel 3

Zu einer Suspension von 117 g eines analog Beispiel 1b) hergestellten Bismutvanadatpigments in 450 ml Wasser wurden 10,8 g Kaliumfluorid zugegeben. Nach Erhitzen der gerührten Suspension auf 80°C und Einstellen eines pH-Wertes von 6 durch Zugabe von 10 gew.-%iger Salpetersäure wurden 55 g wäßrige Bismutnitratlösung (23,7 Gew.-% Bismut) in 45 min zugegeben, wobei der pH-Wert durch gleichzeitige Zugabe von 30 gew.-%iger Natronlauge bei 6 gehalten wurde.

Nach einstündigem Nachrühren bei 80°C und anschließendem Abkühlen auf Raumtemperatur wurde das beschichtete Pigment abfiltriert, mit Wasser gewaschen, einer Naßmahlung auf eine mittlere Teilchengröße von 0,8 µm unterzogen und im Umlufttrockenschrank bei 100°C getrocknet.

Das erhaltene mit BiOF beschichtete Bismutvanadatpigment hatte einen Fluoridgehalt von 0,84 Gew.-% und wurde im Schnellbewitterungstest mit der Note 4-5 bewertet, seine Photochromie dE betrug 0,7.

### Beispiel 4

Zu einer Suspension von 272 g eines analog Beispiel 1a) hergestellten Bismutvanadatpreßkuchens (Feststoffgehalt 27,5 Gew.-%) in 220 ml Wasser wurden eine Lösung von 8,2 g Kaliumfluorid in 325 ml Wasser und eine Lösung von 33 g Calciumnitrattetrahydrat in 325 ml Wasser parallel unter Rühren in 2 h bei Raumtemperatur zugetropft. Der pH-Wert der Suspension lag nach Zugabe der Lösungen bei 5,8.

Nach zweistündigem Erhitzen der Suspension unter Rückfluß und anschließendem Abkühlen auf 80°C wurden 79 ml einer 6,75 gew.-%igen wäßrigen Zinknitratlösung und 78 ml 3,4 gew.-%ige Phosphorsäure parallel in 30 min zugegeben, wobei der pH-Wert durch gleichzeitige Zugabe von 10 gew.-%iger wäßriger Natriumcarbonatlösung bei 5,8 gehalten wurde.

Nach einstündigem Nachrühren bei 80°C und Abkühlen auf Raumtemperatur wurde das beschichtete Pigment abfiltriert, mit Wasser gewaschen, im Umlufttrockenschrank bei 110°C getrocknet und 1 h bei 450°C getempert. Danach wurde das Pigment einer Naßmahlung auf eine mittlere Teilchengröße von 0,8 µm unterzogen und im Umlufttrockenschrank bei 110°C getrocknet.

Das erhaltene mit CaF₂/(Ca,Zn)₃(PO₄)₂ beschichtete Bismutvanadatpigment hatte einen Calciumgehalt von 4,1 Gew.-%, einen Zinkgehalt von 2,1 Gew.-%, einen Phosphorgehalt von 1,0 Gew.-% und einen Fluoridgehalt von 3,0 Gew.-% und wurde im Schnellbewitterungstest mit der Note 4-5 bewertet, seine Photochromie dE betrug 1,1.

### Beispiel 5

Zu einer Suspension von 270 g eines analog Beispiel 1a) hergestellten Bismutvanadatpreßkuchens (Feststoffgehalt 27,5 Gew.-%) in 220 ml Wasser wurden eine Lösung von 8,2 g Kaliumfluorid in 325 ml Wasser und eine Lösung von 33 g Calciumnitrattetrahydrat in 325 ml Wasser parallel unter Rühren in 2 h bei Raumtemperatur zugetropft. Der pH-Wert der Suspension lag nach Zugabe der Lösungen bei 5,8.

Nach Erhitzen der Suspension auf Rückflußtemperatur wurden 150 ml Natronwasserglaslösung (15 g Si/l) in 1,5 h zugegeben. Der pH-Wert stieg dabei auf 6,4 an.

Nach halbstündigem Nachrühren bei 80°C und Einstellen eines pH-Wertes von 5,8 durch Zugabe von 25 gew.-%iger Salpetersäure wurden 79 ml einer 6,75 gew.-%igen wäßrigen Zinknitratlösung und 78 ml 3,4 gew.-%ige Phosphorsäure parallel in 30 min zugegeben, wobei der pH-Wert durch gleichzeitige Zugabe von 10 gew.-%iger wäßriger Natriumcarbonatlösung bei 5,8 gehalten wurde.

Nach einstündigem Nachrühren bei 80°C und Abkühlen auf Raumtemperatur wurde das beschichtete Pigment abfiltriert, mit Wasser gewaschen, im Umlufttrockenschrank bei 110°C getrocknet und 1 h bei 450°C getempert. Danach wurde das Pigment einer Naßmahlung auf eine mittlere Teilchengröße von 0,8 µm unterzogen und im Umlufttrockenschrank bei 100°C getrocknet.

Das erhaltene mit CaF₂/CaSiO₃/SiO₂/Zn₃ (PO₄)₂ beschichtete Bismutvanadatpigment hatte einen Calciumgehalt von 2,8 Gew.-%, einen Zinkgehalt von 1,8 Gew.-%, einen Phosphorgehalt von 0,8 Gew.-% und einen Fluoridgehalt von 2,8 Gew.-% und wurde im Schnellbewitterungstest mit der Note 4-5 bewertet, seine Photochromie dE betrug 1,1.

### Beispiel 6

Zu einer unter Rühren auf 80°C erhitzten Suspension von 100 g eines analog Beispiel 1b) hergestellten Bismutvanadatpigments in 725 ml Wasser wurden 110 g einer 7,5 gew.-%igen wäßrigen Aluminiumnitratlösung in 40 min zugegeben, wobei der pH-Wert durch gleichzeitige Zugabe von 10 gew.-%iger wäßriger Natriumcarbonatlösung bei 6,2 gehalten wurde.

Nach Abkühlen auf 70°C wurden eine Lösung von 10,9 g Kaliumfluorid in 440 ml Wasser und eine Lösung von 44,4 g Calciumnitrattetrahydrat in 440 ml Wasser parallel unter Rühren in 90 min zugetropft. Der pH-Wert der Suspension lag nach Zugabe der Lösungen bei 6,2.

Nach erneutem Erhitzen auf 80°C wurden 106 g einer 6,75 gew.-%igen wäßrigen Zinknitratlösung und 104 g 3,4 gew.-%ige Phosphorsäure parallel in 35 min zugegeben, wobei der pH-Wert durch gleichzeitige Zugabe von 10 gew.-%iger wäßriger Natriumcarbonatlösung bei 5,8 gehalten wurde.

Nach halbstündigem Nachrühren bei 80°C und Abkühlen auf Raumtemperatur wurde das beschichtete Pigment abfiltriert, mit Wasser gewaschen, einer Naßmahlung auf eine mittlere Teilchengröße von 0,8 µm unterzogen und im Umlufttrockenschrank bei 110°C getrocknet.

Das erhaltene mit AlO(OH) /CaF₂/ (Ca,Zn)₃(PO₄)₂ beschichtete Bismutvanadatpigment hatte einen Aluminiumgehalt von 0,9 Gew.-%, einen Calciumgehalt von 3,7 Gew.-%, einen Zinkgehalt von 1,9 Gew.-%, einen Phosphorgehalt von 1,0 Gew.-% und einen Fluoridgehalt von 3,0 Gew.-% und wurde im Schnellbewitterungstest mit der Note 4-5 bewertet, seine Photochromie dE betrug 1,1.

### Beispiel 7

Zu einer unter Rühren auf Rückflußtemperatur erhitzten Suspension von 276 g eines analog Beispiel 1a) hergestellten Bismutvanadatpreßkuchens (Feststoffgehalt 27,1 Gew.-%) in 300 ml Wasser wurden 300 ml Natronwasserglaslösung (15 g Si/l) in 1 h zugegeben, wobei der pH-Wert durch gleichzeitige Zugabe von 25 gew.-%iger Salpetersäure bei 8,8 gehalten wurde.

Nach einstündigem Rühren unter Rückfluß und anschließendem Abkühlen auf 55°C wurden eine Lösung von 8,2 g Kaliumfluorid in 325 ml Wasser und eine Lösung von 33,2 g Calciumnitrattetrahydrat in 325 ml Wasser parallel unter Rühren in 75 min zugetropft. Der pH-Wert der Suspension lag nach Zugabe der Lösungen bei 5,5.

Nach einstündigem Nachrühren bei 55°C und Abkühlen auf Raumtemperatur wurde das beschichtete Pigment abfiltriert, mit Wasser gewaschen, im Umlufttrockenschrank bei 110°C getrocknet und 1 h bei 450°C getempert. Danach wurde das Pigment einer Naßmahlung auf eine mittlere Teilchengröße von 0,8 µm unterzogen und im Umlufttrockenschrank bei 100°C getrocknet.

Das erhaltene mit SiO₂/CaF₂ beschichtete Bismutvanadatpigment hatte einen Calciumgehalt von 2,8 Gew.-%, einen Siliciumgehalt von 4,4 Gew.-% und einen Fluoridgehalt von 2,6 Gew.-% und wurde im Schnellbewitterungstest mit der Note 4-5 bewertet, seine Photochromie dE betrug 1,2.

### Beispiel 8

Zu einer Suspension von 276 g eines analog Beispiel 1a) hergestellten Bismutvanadatpreßkuchens (Feststoffgehalt 27,1 Gew.-%) in 300 ml Wasser wurden eine Lösung von 0,8 g Kaliumfluorid in 50 ml Wasser, eine Lösung von 3,3 g Calciumnitrattetrahydrat in 50 ml Wasser und 300 ml Natronwasserglaslösung (15 g Si/l) parallel unter Rühren in 60 min bei Raumtemperatur zugetropft, wobei der pH-Wert durch gleichzeitige Zugabe von 25 gew.-%iger Salpetersäure bei 8,8 gehalten wurde.

Nach Erhitzen auf Rückflußtemperatur, einstündigem Nachrühren bei dieser Temperatur und Abkühlen auf Raumtemperatur wurde das beschichtete Pigment abfiltriert, mit Wasser gewaschen, im Umlufttrockenschrank bei 110°C getrocknet und 1 h bei 450°C getempert. Danach wurde das Pigment einer Naßmahlung auf eine mittlere Teilchengröße von 0,8 µm unterzogen und im Umlufttrockenschrank bei 100°C getrocknet.

Das erhaltene mit CaF₂/CaSiO₃/SiO₂ beschichtete Bismutvanadatpigment hatte einen Calciumgehalt von 0,74 Gew.-%, einen Siliciumgehalt von 4,6 Gew.-% und einen Fluoridgehalt von 0,1 Gew.-% und wurde im Schnellbewitterungstest mit der Note 4-5 bewertet, seine Photochromie dE betrug 1,1.

### Beispiel 9

a) Zu einer Mischung aus 1000 g Wasser, 411 g wäßriger Natriumvanadatlösung (7 Gew.-% Vanadium) und 10 g 85 gew.-%iger Phosphorsäure wurden unter Rühren zunächst in 60 min 488 g wäßrige Bismutnitratlösung (24 Gew.-% Bismut) und anschließend 2,2 g Calciumhydroxid und 2,3 g Zinkoxid zugegeben.
   Der pH-Wert der Mischung wurde dann mit 30 gew.-%iger Natronlauge in 2 h auf 4,5 und anschließend mit 5 gew.-%iger Natronlauge in 6 min auf 4,7 eingestellt.
   Die entstandene Suspension wurde dann unter Einhaltung des pH-Wertes 4,7 auf 95°C erhitzt. Nach ca. 2 h färbte sich die Suspension tiefgelb, und der pH-Wert stieg zügig auf 7,9 an. Die Suspension wurde bis zur pH-Konstanz bei 95°C gerührt.
   Nach Abkühlen auf Raumtemperatur wurde das Produkt abfiltriert und salzfrei gewaschen und bis zur Weiterverarbeitung als Preßkuchen (Feststoffgehalt: von 20 bis 35 Gew.-%; im vorliegenden Fall: 28,2 Gew.-%) aufbewahrt.
   Das erhaltene dotierte Bismutvanadatpigment hatte einen Bismutgehalt von 61,0 Gew.-%, einen Vanadiumgehalt von 14,8 Gew.-%, einen Calciumgehalt von 0,6 Gew.-%, einen Zinkgehalt von 0,9 Gew.-% und einen Phosphorgehalt von 0,8 Gew.-%.
b) Das in a) erhaltene dotierte Bismutvanadatpigment wurde nach dem Trocknen 1 h bei 450°C getempert. Danach wurde das Pigment einer Naßmahlung in Gegenwart von Wasser auf eine mittlere Teilchengröße von 0,8 µm unterzogen und im Umlufttrockenschrank bei 100°C getrocknet.
   Das erhaltene unbeschichtete dotierte Bismutvanadatpigment wurde im Schnellbewitterungstest mit der Note 3-4 bewertet.

### Beispiel 10

Zu einer Suspension von 647 g eines analog Beispiel 9a) hergestellten dotierten Bismutvanadatpreßkuchens (Feststoffgehalt 30,9 Gew.-%) in 700 ml Wasser wurden eine Lösung von 21,9 g Kaliumfluorid in 325 ml Wasser und eine Lösung von 89 g Calciumnitrattetrahydrat in 900 ml Wasser parallel unter Rühren in 75 min bei Raumtemperatur zugetropft. Der pH-Wert der Suspension lag nach Zugabe der Lösungen bei 7,1.

Nach Erhitzen der Suspension auf Rückflußtemperatur wurden 800 ml Natronwasserglaslösung (15 g Si/l) in 1 h zugegeben. Der pH-Wert stieg dabei auf 8,2 an.

Nach halbstündigem Nachrühren bei dieser Temperatur und Abkühlen auf Raumtemperatur wurde das beschichtete Pigment abfiltriert, mit Wasser gewaschen, im Umlufttrockenschrank bei 110°C getrocknet und 1 h bei 450°C getempert. Danach wurde das Pigment einer Naßmahlung auf eine mittlere Teilchengröße von 0,8 µm unterzogen und im Umlufttrockenschrank bei 100°C getrocknet.

Das erhaltene mit CaF₂/CaSiO₃/SiO₂ beschichtete dotierte Bismutvanadatpigment hatte einen Calciumgehalt von 5,3 Gew.-%, einen Siliciumgehalt von 4,0 Gew.-% und einen Fluoridgehalt von 2,5 Gew.-% und wurde im Schnellbewitterungstest mit der Note 5 bewertet.

### Beispiel 11

Zu einer Suspension von 647 g eines analog Beispiel 9a) hergestellten dotierten Bismutvanadatpreßkuchens (Feststoffgehalt 30,9 Gew.-%) in 1200 ml Wasser wurden eine Lösung von 4,4 g Kaliumfluorid in 325 ml Wasser und eine Lösung von 8,7 g Calciumnitrattetrahydrat in 325 ml Wasser parallel unter Rühren in 60 min bei Raumtemperatur zugetropft. Der pH-Wert der Suspension lag nach Zugabe der Lösungen bei 7,0.

Nach Erhitzen der Suspension auf Rückflußtemperatur wurden 360 ml Natronwasserglaslösung (15 g Si/l) in 50 min zugegeben. Der pH-Wert stieg dabei auf 7,9 an.

Dann wurden 219 g einer 7,5 gew.-%igen wäßrigen Aluminiumnitratlösung in 45 min zugegeben, wobei der pH-Wert durch gleichzeitige Zugabe von 10 gew.-%iger wäßriger Natriumcarbonatlösung bei 6,1 gehalten wurde.

Nach halbstündigem Nachrühren bei Rückflußtemperatur wurden 164 g einer 5,2 gew.-%igen wäßrigen Calciumnitratlösung und 157 g 3,4 gew.-%ige Phosphorsäure in 45 min zugegeben, wobei der pH-Wert durch gleichzeitige Zugabe einer 10 gew.-%igen wäßrigen Natriumcarbonatlösung bei 5,8 gehalten wurde.

Nach erneutem halbstündigen Nachrühren bei Rückflußtemperatur wurden schließlich 212 g einer 6,75 gew.-%igen Zinknitratlösung und 207 g 3,4 gew.-%ige Phosphorsäure zugegeben, wobei der pH-Wert wiederum durch gleichzeitige Zugabe einer 10 gew.-%igen wäßrigen Natriumcarbonatlösung bei 5,8 gehalten wurde.

Nach abschließendem halbstündigem Nachrühren bei Rückflußtemperatur und Abkühlen auf Raumtemperatur wurde das beschichtete Pigment abfiltriert, mit Wasser gewaschen, im Umlufttrockenschrank bei 110°C getrocknet und 1 h bei 500°C getempert. Danach wurde das Pigment einer Naßmahlung auf eine mittlere Teilchengröße von 0,8 µm unterzogen und im Umlufttrockenschrank bei 100°C getrocknet.

Das erhaltene mit CaF₂/SiO₂/AlO(OH)/Ca₃(PO₄)₂/Zn₃(PO₄)₂ beschichtete dotierte Bismutvanadatpigment hatte einen Calciumgehalt von 2,1 Gew.-%, einen Siliciumgehalt von 1,4 Gew.-%, einen Aluminiumgehalt von 0,9 Gew.-%, einen Zinkgehalt von 2,9 Gew.-%, einen Phosphorgehalt von 2,1 Gew.-% und einen Fluoridgehalt von 0,6 Gew.-% und wurde im Schnellbewitterungstest mit der Note 4-5 bewertet.

### Beispiel 12

Zu einer unter Rühren auf 80°C erhitzten Suspension von 403 g eines analog Beispiel 9a) hergestellten dotierten Bismutvanadatpreßkuchens (Feststoffgehalt 24,8 Gew.-%) in 400 ml Wasser wurden 103 g einer 5,2 gew.-%igen wäßrigen Calciumnitratlösung und 98 g 3,4 gew.-%ige Phosphorsäure parallel in 30 min zugetropft, wobei der pH-Wert durch gleichzeitige Zugabe einer 10 gew.-%igen wäßrigen Natriumcarbonatlösung bei 5,8 gehalten wurde.

Nach halbstündigem Nachrühren und anschließendem Abkühlen auf 55°C wurden eine Lösung von 7,8 g Kaliumfluorid in 325 ml Wasser und eine Lösung von 33 g Calciumnitrattetrahydrat in 325 ml Wasser parallel in 45 min zugetropft. Der pH-Wert lag nach Zugabe der Lösungen bei 7,1.

Nach Erhitzen der Suspension auf Rückflußtemperatur wurden 300 ml Natronwasserglaslösung (15 g Si/l) in 1 h zugegeben. Der pH-Wert stieg dabei auf 8,3 an.

Nach abschließendem halbstündigem Nachrühren bei Rückflußtemperatur und Abkühlen auf Raumtemperatur wurde das beschichtete Pigment abfiltriert, mit Wasser gewaschen, im Umlufttrockenschrank bei 110°C getrocknet und 1 h bei 450°C getempert. Danach wurde das Pigment einer Naßmahlung auf eine mittlere Teilchengröße von 0,8 µm unterzogen und im Umlufttrockenschrank bei 100°C getrocknet.

Das erhaltene mit Ca₃(PO₄)₂/CaF₂/CaSiO₃/SiO₂ beschichtete dotierte Bismutvanadatpigment hatte einen Calciumgehalt von 5,8 Gew.-%, einen Siliciumgehalt von 3,4 Gew.-%, einen Phosphorgehalt von 1,5 Gew.-% und einen Fluoridgehalt von 2,0 Gew.-% und wurde im Schnellbewitterungstest mit der Note 5 bewertet.

### Beispiel 13

50 g eines analog Beispiel 9a) hergestellten und dann getrockneten dotierten Bismutvanadatpigments wurden 1 h bei 500°C getempert. Das abgekühlte Pigment wurde dann einer Naßmahlung in 365 ml Wasser mit Glaskugeln (0,8 mm Durchmesser) unterzogen und dann nach Abtrennung der Glaskugeln mit weiteren 400 ml Wasser versetzt.

Zu dieser Suspension wurden 0,78 g Kaliumfluorid zugegeben. Nach Einstellen eines pH-Wertes von 6 durch Zugabe von 10 gew.-%iger Salpetersäure wurden 11,6 g Bismutnitratlösung (23,8 Gew.-% Bismut) in 20 min bei Raumtemperatur zugegeben, wobei der pH-Wert durch gleichzeitige Zugabe von 10 gew.-%iger wäßriger Natriumcarbonatlösung bei 6 gehalten wurde.

Nach einstündigem Nachrühren wurden eine Lösung von 2,73 g Kaliumfluorid in 150 ml Wasser und eine Lösung von 11,1 g Calciumnitrattetrahydrat in 150 ml Wasser parallel unter Rühren in 30 min bei Raumtemperatur zugetropft. Der pH-Wert der Suspension lag nach Zugabe der Lösungen bei 5,4.

Nach Erhitzen der Suspension auf 80°C wurden 100 ml Natronwasserglaslösung (15 g Si/l) in 1 h zugegeben. Der pH-Wert stieg dabei auf 8,2 an.

Nach einstündigem Nachrühren bei 80°C und Abkühlen auf Raumtemperatur wurde das beschichtete Pigment abfiltriert, mit Wasser gewaschen, einer Naßmahlung auf eine mittlere Teilchengröße von 0,8 µm unterzogen und im Umlufttrockenschrank bei 100°C getrocknet.

Das erhaltene mit BiOF/CaF₂/CaSiO₃/SiO₂ beschichtete dotierte Bismutvanadatpigment hatte einen Calciumgehalt von 2,7 Gew.-%, einen Siliciumgehalt von 2,1 Gew.-% und einen Fluoridgehalt von 1,6 Gew.-% und wurde im Schnellbewitterungstest mit der Note 4-5 bewertet.

**Tabelle:**

| Koloristische Daten der hergestellten Bismutvanadatpigmente | | | |
|---|---|---|---|
| Beispiel | Hue [°C] | C* | L* |
| 1a | 92,9 | 87,7 | 81,7 |
| 1b | 93,5 | 98,2 | 87,7 |
| 2 | 93,6 | 99,1 | 88,9 |
| 3 | 93,5 | 99,3 | 88,3 |
| 4 | 93,4 | 99,3 | 88,9 |
| 5 | 93,4 | 98,8 | 88,4 |
| 6 | 93,4 | 100,1 | 88,9 |
| 7 | 93,4 | 98,7 | 88,3 |
| 8 | 93,0 | 99,9 | 89,0 |
| 9a | 91,3 | 88,2 | 82,0 |
| 9b | 92,6 | 97,7 | 87,2 |
| 10 | 92,6 | 100,1 | 88,7 |
| 11 | 92,4 | 100,0 | 87,7 |
| 12 | 92,5 | 100,0 | 88,4 |
| 13 | 92,9 | 100,3 | 88,4 |

## Patentansprüche

1. Bismutvanadatpigmente, die mindestens eine metallfluoridhaltige Beschichtung, die Calciumfluorid, Bismutoxyfluorid oder ein Lanthanidenfluorid oder -oxyfluorid oder ein Gemisch dieser Fluoride enthält, aufweisen.

2. Bismutvanadatpigmente nach Anspruch 1, die zusätzlich mindestens eine metalloxidhaltige Beschichtung aufweisen.

3. Bismutvanadatpigmente nach Anspruch 2, bei denen die metalloxidhaltige Beschichtung ein Oxid oder ein Oxidhydrat von einem Erdalkalimetall, Aluminium, Silicium, Zinn, Titan, Zirkonium, Hafnium, Niob, Tantal, Zink oder einem Lanthanidenmetall oder ein Mischoxid dieser Metalle oder ein Gemisch dieser Verbindungen enthält.

4. Bismutvanadatpigmente nach Anspruch 1, die zusätzlich mindestens eine metallphosphathaltige Beschichtung aufweisen.

5. Bismutvanadatpigmente nach Anspruch 1, die zusätzlich mindestens eine metalloxidhaltige Beschichtung und mindestens eine metallphosphathaltige Beschichtung aufweisen.

6. Bismutvanadatpigmente nach Anspruch 4 oder 5, bei denen die metallphosphathaltige Beschichtung ein Erdalkalimetallphosphat, Aluminiumphosphat oder Zinkphosphat oder ein Gemisch dieser Phosphate enthält.

7. Verwendung der Bismutvanadatpigmente gemäß den Ansprüchen 1 bis 6 zur Einfärbung von Lacken, Druckfarben und Kunststoffen.

## Claims

1. Bismuth vanadate pigments comprising at least one metal fluoride coating comprising calcium fluoride, bismuth oxyfluoride or a lanthanide fluoride or oxyfluoride or a mixture thereof.

2. Bismuth vanadate pigments as claimed in claim 1, further comprising at least one metal oxide coating.

3. Bismuth vanadate pigments as claimed in claim 2, wherein the metal oxide coating comprises an oxide or an oxide hydrate of an alkaline earth metal, aluminum, silicon, tin, titanium, zirconium, hafnium, niobium, tantalum, zinc or a lanthanide metal or a mixed oxide of these metals or a mixture thereof.

4. Bismuth vanadate pigments as claimed in claim 1, further comprising at least one metal phosphate coating.

5. Bismuth vanadate pigments as claimed in claim 1, further comprising at least one metal oxide coating and at least one metal phosphate coating.

6. Bismuth vanadate pigments as claimed in claim 4 or 5, wherein the metal phosphate coating comprises an alkaline earth metal phosphate, aluminum phosphate or zinc phosphate or a mixture thereof.

7. The use of the bismuth vanadate pigments of any of claims 1 to 6 for coloring paints, printing inks and plastics.

## Revendications

1. Pigments à base de bismuth et de vanadate, qui possèdent au moins un revêtement à base de fluorure métallique, lequel revêtement contient du fluorure de calcium, de l'oxyfluorure de bismuth ou un fluorure de lanthanide ou bien un mélange de ces fluorures.

2. Pigments à base de bismuth et de vanadate selon la revendication 1, qui possèdent en plus au moins un revêtement à base d'oxyde métallique.

3. Pigments à base de bismuth et de vanadate selon la revendication 2, dans lesquels le revêtement à base d'oxyde métallique contient un oxyde ou un hydrate d'oxyde d'un métal alcalino-terreux, d'aluminium, de silicium, d'étain, de titane, de zirconium, d'hafnium, de niobium, de tantale, de zinc ou d'un métal lanthanide ou un oxyde mixte constitué de ces métaux, ou bien un mélange de ces. composés.

4. Pigments à base de bismuth et de vanadate selon la revendication 1, qui possèdent en plus au moins un revêtement à base de phosphate métallique.

5. Pigments à base de bismuth et de vanadate selon la revendication 1, qui possèdent en plus au moins un revêtement à base d'oxyde métallique et au moins un revêtement à base de phosphate métallique.

6. Pigments à base de bismuth et de vanadate selon la revendication 4 ou 5, **caractérisés en ce que** le revêtement à base d'oxyde métallique contient un phosphate d'un métal alcalino-terreux, un phosphate d'aluminium ou un phosphate de zinc, ou bien un mélange de ces phosphates.

7. Mise en oeuvre de pigments à base de bismuth et de vanadate selon les revendications 1 à 6 pour la coloration de laques, d'encres d'imprimerie et de matières synthétiques.
